# EUROPEAN PATENT APPLICATION

(11) **EP 4 765 542 A1**
(43) Date of publication of application: **24.06.2026**
(21) Application number: 25224103.9
(22) Date of filing: 16.12.2025
(51) Int. Cl.: H02J 1/14, B60H 1/00, B60H 1/32

(54) **TRANSPORTATION REFRIGERATION UNIT CONFIGURED TO CONSERVE ENERGY BY AUTOMATICALLY EXECUTING A START-STOP MODE OR A CONTINUOUS-RUN MODE**

(30) Priority: 19.12.2024 US 202463736447 P
(71) Applicant: Carrier Corporation, Palm Beach Gardens, FL 33418 (US)
(72) Inventor: Beaufrere, Florian, 76520 Franqueville-Saint-Pierre (FR)
(74) Representative: Dehns

(57) **Abstract**

A system (100), having: a cargo box (120) defining an interior cargo space (122); a TRU (150) at the front end (130) of the cargo box (120), and includes a cooling system (155) to maintain the interior cargo space (122) at a set temperature, the TRU (150) consumes of at least one type of energy source (158) to run the cooling system (155); and a controller (160) for selectively cooling the interior cargo space (122) by switching a run mode of the cooling system (155) between a start-stop mode and a continuous-run mode, depending on a consumption of energy from an energy source (158) by the TRU (150), the controller (160) determines the consumption from at least one factor, including: an atmospheric condition; a time of day; a geographic location of the cargo box (120); the set temperature for the interior cargo space; a type of goods; or a type of energy source.

## Description

### BACKGROUND

The embodiments described herein are directed to a transportation refrigeration unit (TRU) and more specifically to a transportation refrigeration unit configured to conserve energy by automatically executing a start-stop mode or a continuous-run mode.

In general, a TRU uses a start-stop mode (SS mode) when transporting frozen goods and a continuous-run mode (CR mode) when transporting perishable goods. It is also generally known that the SS mode, compared with the CR mode, may reduce by up to 50% a consumption of fossil fuel or electricity (both may be generally referred to as fuel), depending on the type of energy utilized to run the TRU. However, depending on, e.g., external conditions and a temperature set-point for the cargo area, the SS mode could result in additional running costs for the TRU, e.g., when the ambient temperature is high (above 35C) and setpoint is around zero degrees C. In this case, the SS mode may consume more energy than the CR mode.

### BRIEF SUMMARY

In an aspect of the invention a transportation refrigeration system is provided, the system including: a cargo box extending from a front end to an aft end and defining an interior cargo space for transporting goods of at least one type; a transportation refrigeration unit (TRU) at the front end of the cargo box, wherein the TRU includes a cooling system to maintain the interior cargo space at a set temperature, and wherein the TRU is configured for consumption of at least one type of energy source to run the cooling system; and a controller, operationally coupled to the TRU, for selectively cooling the interior cargo space of the cargo box by switching a run mode of the cooling system between a start-stop mode (SS mode) and a continuous-run mode (CR mode), depending on a consumption of energy from an energy source by the TRU, wherein the controller determines the consumption based on utilizing at least one factor, including one or more of: an atmospheric condition; a geographic location of the cargo box; the set temperature for the interior cargo space; a type of goods; or a type of energy source.

In any of the aspects or embodiments described above or herein, the at least one factor utilized by the controller may be directed to the type of energy source, including whether the energy source is: a fossil fuel; electricity supplied from a battery; or electricity supplied from a power grid.

In any of the aspects or embodiments described above or herein, the at least one factor utilized by the controller may be directed to the type of goods includes whether the goods are non-perishable goods or perishable goods, wherein the perishable goods are frozen goods or fresh goods.

In any of the aspects or embodiments described above or herein, the at least one factor utilized by the controller may be directed to the atmospheric condition, which includes one or more of current outside temperature, near-term forecasted outside temperature, and a solar radiation level.

In any of the aspects or embodiments described above or herein, when the goods are the perishable goods, the controller may be configured to switch from the SS mode to the CR mode upon determining that: responsive to an increase in ambient temperature, the consumption of the energy source will increase above a first threshold to maintain the interior cargo space at the set temperature; or responsive to a decrease in ambient temperature, the consumption of the energy source will increase above a second threshold to maintain the interior cargo space at the set temperature.

In any of the aspects or embodiments described above or herein, the controller may select the run mode by applying the at least one factor to a lookup table or map in a database accessible by the controller.

In any of the aspects or embodiments described above or herein, the energy source may be electricity supplied from the battery and the consumption is determined by the controller communicating with an on-board battery management system.

In any of the aspects or embodiments described above or herein, the energy source may be electricity supplied from the power grid and the consumption of the energy source is determined based on the controller monitoring voltage supplied by the power grid, amperage drawn by the TRU from the power grid, and a phase angle between the voltage and amperage, to thereby monitor real power utilized by the TRU.

In any of the aspects or embodiments described above or herein, the TRU may be powered by an engine, the energy source is the fossil fuel, and the consumption of the energy source is determined based monitoring, by the controller, a fuel flow or an engine speed of the engine.

In any of the aspects or embodiments described above or herein, the TRU may be powered by a generator, the energy source is the fossil fuel, and the consumption of the energy source is determined based monitoring, by the controller, an amperage load drawn by the generator.

In another aspect of the invention is a method of operating a transportation refrigeration system is provided, the method including: selectively cooling an interior cargo space of a cargo box by a transportation refrigeration unit (TRU), by control of a controller operatively coupled to the TRU, by switching a run mode of a cooling system of the TRU between a start-stop mode (SS mode) and a continuous-run mode (CR mode), depending on a consumption of energy from an energy source by the TRU, wherein the method includes determining, by the controller, the consumption of energy based on at least one factor, including one or more of: an atmospheric condition that includes one or more of ambient temperature and solar radiation; a time of day; a geographic location of the cargo box; a set temperature for the interior cargo space; a type of goods; or a type of energy source.

In any of the aspects or embodiments described above or herein, the method may include utilizing, by the controller, the at least one factor directed to the type of energy source, including: fossil fuel; electricity supplied from a battery; or electricity supplied from a power grid.

In any of the aspects or embodiments described above or herein, the method may include utilizing, by the controller, the at least one factor directed to the type of goods, includes non-perishable goods or perishable goods, wherein the perishable goods are frozen goods or fresh goods.

In any of the aspects or embodiments described above or herein, the method may include utilizing, by the controller, the at least one factor directed to the atmospheric condition, including one or more of current outside temperature, near-term forecasted outside temperature, and a solar radiation level.

In any of the aspects or embodiments described above or herein, when a type of the goods are the perishable goods, the method may include switching, by the controller, from the SS mode to the CR mode upon determining that: responsive to an increase in ambient temperature, a consumption of the energy source will increase above a first threshold to maintain the interior cargo space at the set temperature; or responsive to a decrease in ambient temperature, the consumption of the energy source will increase above a second threshold to maintain the interior cargo space at the set temperature.

In any of the aspects or embodiments described above or herein, the method may include selecting, by the controller, the run mode by applying the at least one factor to a lookup table or map in a database accessible by the controller.

In any of the aspects or embodiments described above or herein, the method may include determining, by the controller when the energy source is electricity supplied from the battery, a consumption of the energy source by the controller communicating with an on-board battery management system.

In any of the aspects or embodiments described above or herein, the method may include determining, by the controller when the energy source is electricity supplied from the power grid, a consumption of the energy source based on monitoring voltage supplied by the power grid, amperage drawn by the TRU from the power grid, and a phase angle between the voltage and amperage, to thereby monitor real power utilized by the TRU.

In any of the aspects or embodiments described above or herein, the method may include determining, by the controller when the TRU is powered by an engine and the energy source is the fossil fuel, a consumption of the energy source based on monitoring a fuel flow or an engine speed of the engine.

In any of the aspects or embodiments described above or herein, the method may include determining, by the controller when the TRU is powered by a generator and the energy source is the fossil fuel, a consumption of the energy source based on monitoring, by the controller, an amperage load drawn by the generator.

### BRIEF DESCRIPTION OF THE DRAWINGS

The present disclosure is illustrated by way of example and not limited to the accompanying figures in which like reference numerals indicate similar elements.
FIG. 1A shows a transportation refrigeration system configured to conserve energy by automatically executing a start and stop mode or a continuous run mode, according to an embodiment;
FIG. 1B is a rear perspective view of a transportation refrigeration unit (TRU) utilized with the system;
FIG. 2A shows details of the TRU of the disclosed system in a front view;
FIG. 2B shows details of the TRU of the disclosed system in a rear view;
FIG. 2C shows a TRU powered by different energy sources;
FIG. 3A shows consumption of energy and a selected operational mode of the TRU when fresh goods are in the cargo box having a setpoint temperature of between zero Celsius and twenty degrees above zero Celsius;
FIG. 3B shows consumption of energy and a selected operational mode of the TRU when frozen goods are in the cargo box having a setpoint temperature of between ten below zero Celsius and twenty Celsius below zero Celsius;
FIG. 4 is a chart showing whether the controller selects the SS mode or the CR mode considering only the setpoint temperature and the ambient temperature;
FIG. 5 is a graph showing whether the controller selects the SS mode or the CR mode considering only a change in temperature from the setpoint SP; and
FIG. 6 is a flowchart showing a method of operating the disclosed system to conserve energy by automatically executing a start and stop mode or a continuous run mode.

### DETAILED DESCRIPTION

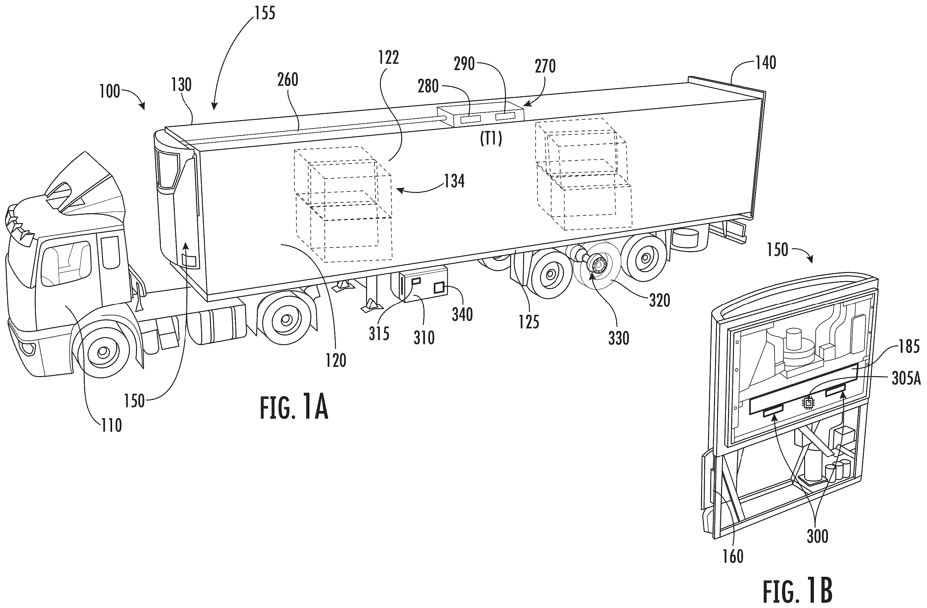

Turning to FIGS. 1A and 1B, a transport refrigeration system 100 is shown. The system 100 includes a truck 110 that hauls a cargo box 120, such as a refrigerated shipping container supported on a trailer 125. The cargo box 120 extends from a front end 130 to an aft end 140 defining an interior cargo space 122 in which goods 134 of different types are shipped, including nonperishable and perishable goods, i.e., frozen or fresh perishable goods. Perishable goods typically have a short shelf life, such as fruit, vegetables, dairy, and plants. Non-perishable goods may not need extensive or any refrigeration, such as tinned or vacuum-packed goods

The front end 130 of the cargo box 120 includes a transportation refrigeration unit (TRU) 150. The TRU 150 has a cooling system 155 that is capable of maintaining a setpoint temperature (or set temperature) T1 with the interior cargo space 122. The position of the TRU is hereby selected for illustrative purposes only, the TRU may alternatively be located in the aft end 140 of the cargo box 120 or in a position between the front end 130 and the aft end 140.

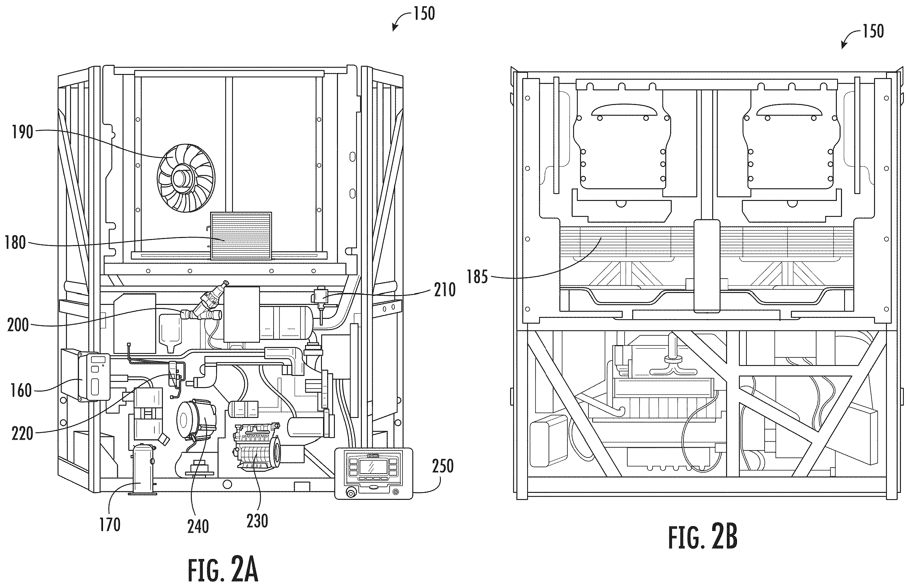

Specifically, as shown in FIGS. 2A and 2B, the TRU 150 includes a controller 160. The controller 160 may be an electronics controller, with an internal processor and non-transitory memory, and the controller 160 may use a CAN-bus communication protocol, as a non-limiting embodiment. A flow motivator 170 of the TRU 150 may be a compressor that pushes a flow of refrigerant through the system. The TRU 150 may also have a condenser coil 180, which may be a microchannel condenser coil, that is accompanied by a fan 190. An evaporator coil 185 is shown in FIG. 2B. A suction modulation valve 200 of the TRU 150 may control the flow of refrigerant gas into the compressor 170 to regulate temperature control and compressor power. The TRU 150 may also have an expansion valve 210 and an economizer 220 that acts as an evaporator to more precisely control the temperature and flow of the refrigerant entering a main evaporator. An engine 230 of the TRU 150 is controlled by the controller 160 and powers a generator 240 to produce electricity that powers the electrical components of the TRU 150. A user interface 250 of the TRU 150 enables a user to access information stored in the controller 160 and engage user provided controls.

Turning back to FIGS. 1A and 1B, the system 100 may include cooling tubes 260 that lead from the primary refrigeration unit (FIG. 1B) to an air chute 270 within the cargo box 120. The air chute 270 includes a secondary evaporator coil 280 and a blower 290. The cooling tubes 260 and air chute 270 are optional and may be replaced with a fan that blows cooled air supplied from the TRU 150 via a duct.

For defrosting the evaporator coil 185, the TRU 150 may have heating elements 300 located near, e.g., under the evaporator coil 185 and controlled by the controller 160. To control operation of the compressor 170, the system 100 may include one or more of a temperature sensor 305 located at the evaporator coil 185, indicative a temperature within the cargo box 120. The sensors 305 may communicate with the controller 160 using wired or wireless protocols. The sensors 305 may be temperature sensors and more specifically return air temperature (RAT) sensors.

To provide supplemental electric power to the TRU 150, the system 100 may include an energy storage system (ESS) 310, with at least one battery, for example, mounted under the cargo box 120. Parameters of the battery ESS 310 may be monitored with a battery management system (BMS) 315 that is coupled to the controller 160. Wheels 320 may be equipped with a regenerative braking system 330, e.g., a generator, that regeneratively capture energy which can be stored in the ESS 310. Alternatively, the ESS 310 may be charged on the grid, such as the U.S. or EU electric power grid, via an outlet 340 electrically coupled to the ESS 310.

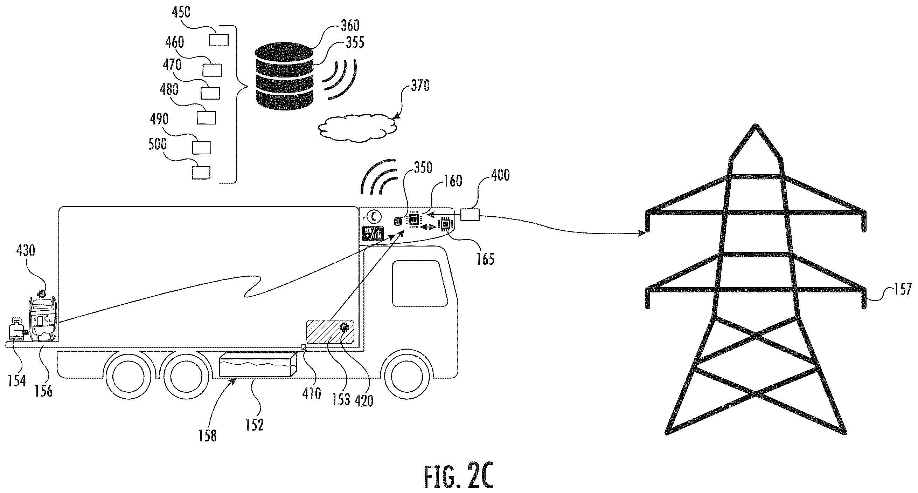

The compressor 170 may be powered by the generator 240, which is powered by the engine 230. Lights and other relatively low powered electrical devices of the TRU 150, which may include the controller 160 and user interface 250, may run off the ESS 310. It is to be appreciated that the TRU 150 is a non-limiting example. As shown in FIG. 2C, a TRU 150 may be powered by a fossil fuel 151 as an energy source (generally 158), stored within an on-board fuel tank 152 and utilized by an on-board engine 153, or via a portable fuel tank 154 as an energy source 158 and utilized by a portable generator 156. Or the TRU 150 may receive supplemental power via the power grid 157 as an energy source 158. Each of the different types of energy sources 158 are within the scope of the embodiments.

According to the embodiments, the system 100, via the controller 160, is configured to monitor fuel consumption specifications for the particular TRU 150, e.g., depending on the energy source 158 utilized by the TRU 150. The system 100 may utilize different variables for determining the fuel consumption. For a battery powered system (FIG. 1A), electric consumption from the battery system 310 can be directly monitored via the BMS 315. For a standby-network (power grid 157) powered system, consumption of the energy source 158 can be determined by monitoring the voltage, amperage and phase angle of the incoming power, as the watts utilized by the system are determined by multiplying the voltage, the current and the cosine of the phase angle. Such monitoring may be accomplished via a power meter 400 operationally coupled to the controller 160 providing data 405 indicative of the voltage provided by the grid 157, the current pulled by the TRU 150, and the cosine of the phase angle between the voltage and current. For a fossil fuel (e.g., diesel) powered system, the fuel consumption can be determined by fuel flow meter 410 providing data 405 indicative of fuel flow to the onboard engine 153. Alternatively, the fuel consumption can be determined by data 405 of engine speed from an engine controller 420 for the onboard engine 153 coupled to the TRU controller 160. For a system powered by a generator 156, fuel consumption may be obtained by a generator controller 430 of the generator 156 operationally coupled to the TRU controller 160 providing data 405 indicative of amperage pulled by the TRU 150.

According to an embodiment, the system 100 is configured to automatically switch between start-stop (SS) and continuous-run (CR) modes of the cooling system 155 to decrease the consumption of energy from the energy source 158 for the TRU 150. In the CR mode, the system continues to run, even if the temperature is within the desired temperature parameters. In the SS mode, the system turns off once the desired temperature parameters are reached and then turn one when a different between current parameters and the desired parameters are greater than a threshold. The system 100 may apply the consumption data 405 to an embedded local database 350, e.g., on non-transient memory 165 housed with the controller 160, as a nonlimiting example, or a remote databases 360 (the databases are generally referenced as 355) over a network 370, to automatically switch between the refrigeration modes.

In addition to the consumption data 405, at least one factor collected by the controller 160 and fed to the database 355 may include a first factor 450 representing an atmospheric condition that includes one or more of ambient temperature and solar radiation. This information may be relevant for helping to determine the exterior conditions that will tend to heat up or cool down the cargo box 120. A second factor 460 represent a time of day. For example, during the summer, midday may subject the cargo box 120 to excessive heat, which could impact the cargo box 120 during periods when the cooling system 155 is cycled off during the SS mode. A third factor 470 represents the setpoint temperature for the interior cargo space 122. This information is relevant because certain very low setpoint temperatures may be harder to obtain and hold in the SS mode of operation, due to the off cycling. A fourth factor 480 represents the type of the goods 134 in the cargo box 120. This information is relevant because certain types of goods 134 such as perishable frozen goods, may be more sensitive to minor temperature fluctuations that could result from an SS mode of operation, e.g., due to the off-cycling. A fifth factor represents the type of energy source 158. This information is relevant because certain energy sources 158 may be more limited in availability, and could be more quickly drained in a CR mode. A sixth factor 500 could be geographic location. This information is relevant because certain locations may subject the cargo box 120 to mild conditions, which may be manageable under the SS mode of operation, or may present conditions of excessive heat or cold, which may be better suited for a CR mode of operation.

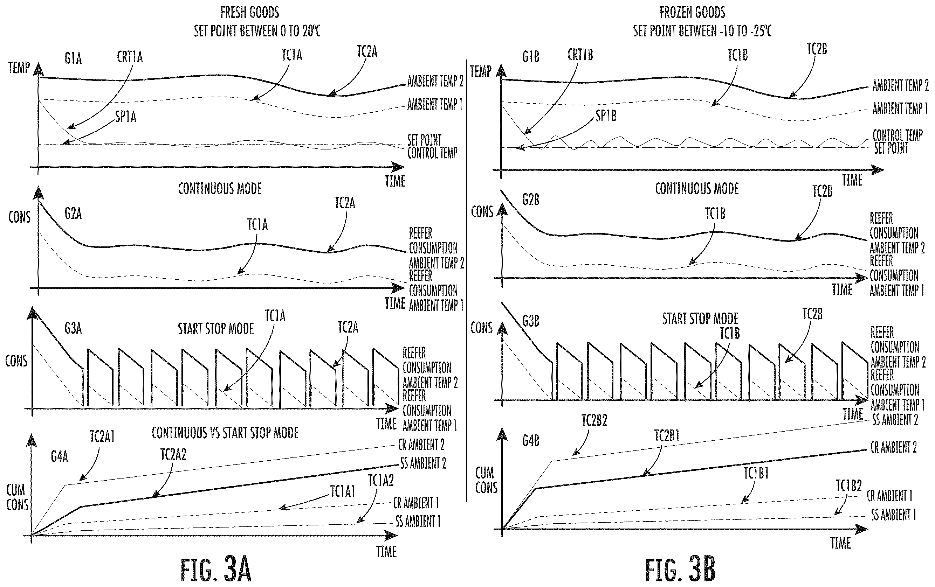

For example, turning to FIG. 3A the system 100 may utilize the factor that identifies fresh goods will be in the cargo box 120, and the cargo box 120 has a setpoint temperature (or set temperature) of between zero Celsius and twenty degrees above zero Celsius. In the top graph G1A, two different ambient temperature curves TC1A, TC2A are provided, where the first curve represents cooler ambient conditions. The setpoint SP1 is graphed as well as the desired controlled temperature CRT1A within the cargo box 120. The control temperature is desirably stable over time, e.g., with minimal fluctuations, once it is reached.

In the second graph G1B, the consumption is graphed for a CR mode of operation for the first and second temperature curves TC1A, TC2A. As can be seen, consumption is lower for the cooler ambient conditions TC1 in the CR mode. In the third graph G3A, the consumption is graphed for a SS mode of operation for the first and second temperature curves TC1A, TC2A. In the fourth graph G4A, the consumption is graphed for a CR mode of operation for the first and second temperature curves TC1A1, TC2A1 and for the SS mode of operation for the first and second temperature curves TC1A2, TC2A2.

As can be seen, while the cooling system 155 of the TRU 150 is running, consumption is lower for the cooler ambient conditions TC1A in the SS mode. The resulting consumption is provided in table 1A, below for both fuel and grid power.

| | Ambient Temp 1 | | Ambient Temp 2 | |
|---|---|---|---|---|
| | SS | CR | SS | CR |
| **Fuel consumption** | 0,5 l/h | 1,5 l/h | 3 l/h | 2,5 l/h |
| **Standby (grid) consumption** | 3 kWh | 5 kWh | 15 kWh | 12 kWh |
| **Optimal Mode** | SS | | CR | |

For both types of energy sources 158, cooler conditions result in the controller 160 selecting the SS mode. In comparison, the hotter conditions result in the controller 160 selecting the CR mode to obtain the relatively lower energy consumption. That is, over the duration of the use of the cooling system 155, in view of the energy required for cycling-on the cooling system 155 in the SS mode, the overall energy consumption is lower with the CR mode when there are more extreme (hotter or colder) ambient temperature conditions.

In another example, turning to FIG. 3B the system 100 may be utilize the factor that identifies frozen goods 134 will be in the cargo box 120, and the cargo box 120 has a setpoint temperature of between ten degrees below zero Celsius and twenty degrees below zero Celsius. In the top graph G1B, two different ambient temperature curves TC1B, TC2B are provided, where the first curve represents cooler ambient conditions. The setpoint SP1B is graphed as well as the desired controlled temperature CRT1B within the cargo box 120. The control temperature may be allowed to fluctuate once it is reached.

In the second graph G2A, the consumption is graphed for a CR mode of operation for the first and second temperature curves TC1B, TC2B. As can be seen, consumption is lower for the cooler ambient conditions TC1B in the CR mode. In the third graph G3B, the consumption is graphed for the SS mode of operation for the first and second temperature curves TC1B, TC2B. In the fourth graph G4B, the consumption is graphed for a CR mode of operation for the first and second temperature curves TC1B1, TC2B1 and for the SS mode of operation for the first and second temperature curves TC1B2, TC2B2. As compared with the fourth graph G4A for the fresh goods application, the curves for the first ambient conditions are similarly arranged with the consumption being greater for the CR mode. The curves for the second ambient condition have switched their respective positions, indicating that more energy is required in the CR mode for maintaining fresh goods at extreme temperatures, while more energy is required in the SS mode for maintaining frozen goods at extreme temperatures.

As can be seen, while the cooling system 155 of the TRU 150 is running, consumption of energy is lower for the cooler ambient conditions TC1B in the SS mode. The resulting consumption is provided in table 1B, below for both fuel and grid power.

| | Ambient Temp 1 | | Ambient Temp 2 | |
|---|---|---|---|---|
| | SS | CR | SS | CR |
| **Fuel consumption** | 1 1/h | 2 l/h | 1,5 l/h | 1 l/h |
| **Standby consumption** | 4 kWh | 6 kWh | 7 kWh | 5 kWh |
| **Optimal Mode** | SS | | CR | |

For both types of energy sources 158, cooler conditions result in the controller 160 selecting the SS mode. In comparison, the hotter conditions result in the controller 160 selecting the CR mode to obtain the relatively lower energy consumption. That is, over the duration of the use of the cooling system 155, in view of the energy required for cycling-on the cooling system 155 in the SS mode, the overall energy consumption is lower with the CR mode during more extreme (hotter or colder) ambient temperature conditions, as indicated above with the discussion of the different curves in the fourth graphs in FIGS. 3A and 3B.

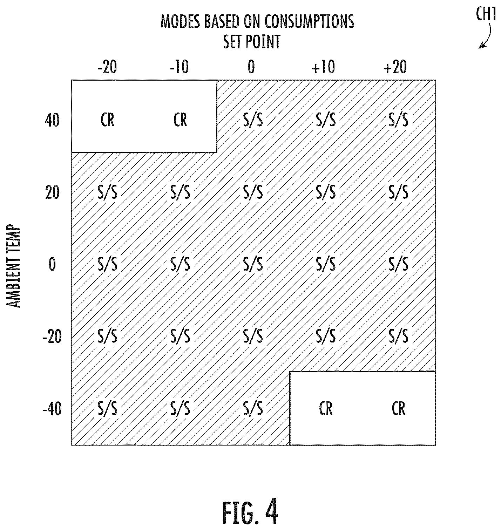

As shown in FIG. 4, a chart CH1 shows whether the controller 160 selects the SS mode (denoted as "S/S") or the CR mode (denoted as "CR") considering only the setpoint temperature and the ambient temperature. In relatively extreme conditions, such as a low setpoint (-10 or -20 degrees) and a high ambient temperature (40 degrees), the CR mode is selected. Similarly, with a relatively high setpoint (+10 or +20 degrees) and a low ambient temperature (-40 degrees), the CR mode is selected. Otherwise, the SS mode is selected by the controller 160.

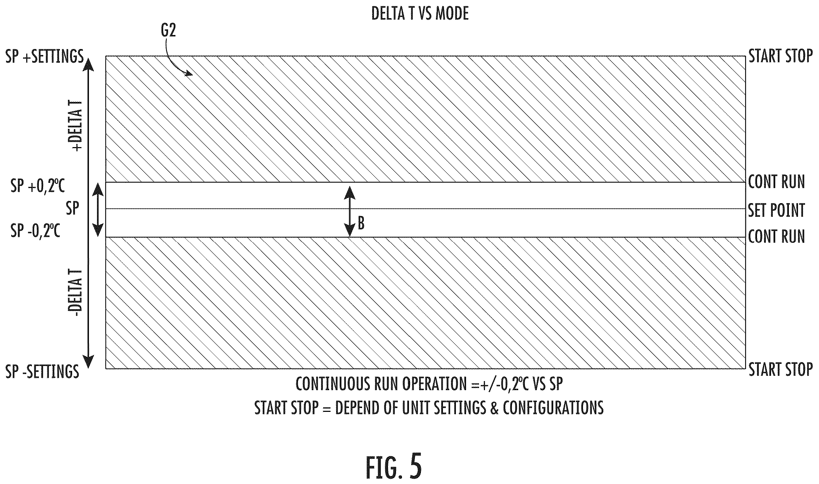

Turning to FIG. 5, a graph G2 shows whether the controller 160 selects the SS mode or the CR mode considering only a change in temperature from the setpoint SP. A change above the SP is identified as +Delta T. This could occur when the ambient temperature is high relative to setpoint SP. A change below the setpoint is identified as -Delta T. This could occur when the ambient temperature is low relative to setpoint SP. As shown in the graph, for a narrow bandwidth B of temperature changes around the setpoint SP, e.g., +/- 0.2C, the CR mode is preferable. However, as a larger change around the setpoint SP is tolerated, in either the + or -Delta T ranges, the SS mode is acceptable.

In viewing FIGS. 4 and 5, it can be seen that the controller 160 switches from the SS mode to the CR mode upon determining that responsive to an increase in the ambient temperature, the consumption of the energy will increase (e.g., in magnitude) above a threshold to maintain an interior cargo space within a predetermined temperature range of the setpoint SP (e.g., 2C). The controller 160 switches from the SS mode to the CR mode upon determining that responsive to a decrease in ambient temperature, the consumption of the energy will increase (e.g., in magnitude) above the threshold to maintain the interior cargo space 122 within a predetermined temperature range of the setpoint SP (e.g., 2C).

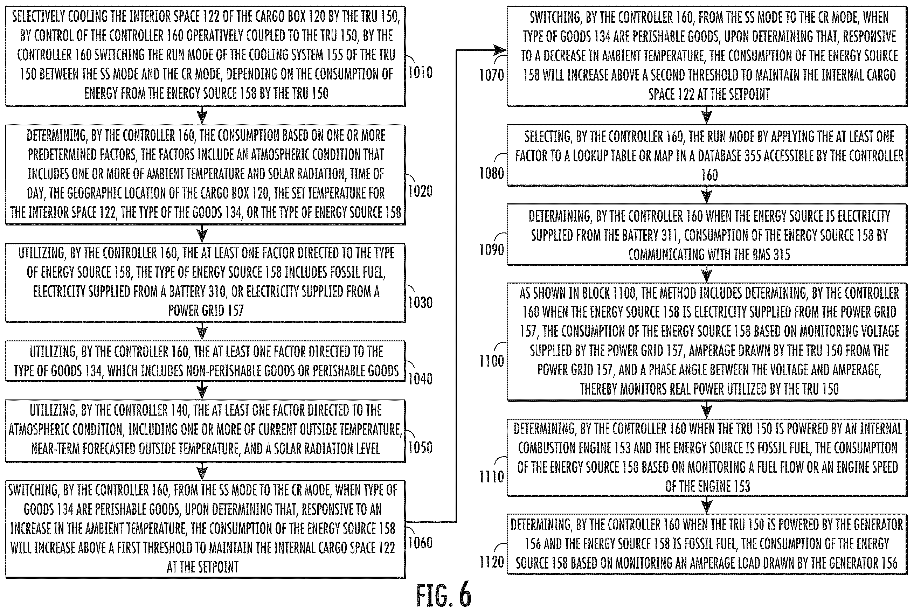

FIG. 6 is a flowchart showing a method of operating a transportation refrigeration system 100. As shown in block 1010, the method includes selectively cooling the interior cargo space 122 of the cargo box 120 by the TRU 150, by control of the controller 160 operatively coupled to the TRU 150. This occurs by the controller 160 switching the run mode of the cooling system 155 of the TRU 150 between the SS mode and the CR mode, depending on the consumption of energy from the energy source 158 by the TRU 150.

As shown in block 1020, the method includes determining, by the controller 160, the consumption based at least one predetermined factor. The at least one factor may include an atmospheric condition that may be one or more of ambient temperature, solar radiation and near-term forecasted temperature, e.g., available to the controller 160 via the internet as a non-limiting example. The at least one factor may also include a time of day, the geographic location of the cargo box 120, the set temperature for the interior cargo space 122, the type of the goods 134, or the type of energy source 158. The influence of these factors is discussed above.

As shown in block 1030, the method may include utilizing, by the controller 160, the at least one factor directed to the type of energy source 158. The type of energy source 158 includes fossil fuel, electricity supplied from a battery 310, or electricity supplied from a power grid 157.

As shown in block 1040, the method may include utilizing, by the controller 160, the at least one factor directed to the type of goods 134, which includes non-perishable goods or perishable goods. The perishable goods are frozen goods or fresh goods.

As shown in block 1050, the method may include utilizing, by the controller 160, the at least one factor directed to the atmospheric condition. The atmospheric condition may include one or more of current outside temperature, near-term forecasted outside temperature, and a solar radiation level.

As shown in block 1060, the method may include switching, by the controller 160, from the SS mode to the CR mode, when type of goods 134 are perishable goods. This may occur upon the controller 160 determining that, responsive to an increase in the ambient temperature, the consumption of the energy source 158 will increase above a first threshold to maintain the interior cargo space 122 at the setpoint.

As shown in block 1070, the method may also include switching, by the controller 160, from the SS mode to the CR mode, when type of goods 134 are perishable goods. This may occur upon determining that, responsive to a decrease in ambient temperature, the consumption of the energy source 158 will increase above a second threshold to maintain the interior cargo space 122 at the setpoint.

As shown in block 1080, the method may include selecting, by the controller 160, the run mode by applying the at least one factor to a lookup table or map in a database 355 accessible by the controller 160. As shown in block 1090, the method may include determining, by the controller 160 when the energy source 158 is electricity supplied from the battery 310, consumption of the energy source 158 by communicating with the BMS 315.

As shown in block 1100, the method may include determining, by the controller 160 when the energy source 158 is electricity supplied from the power grid 157, the consumption of the energy source 158 based on monitoring voltage supplied by the power grid 157, amperage drawn by the TRU 150 from the power grid 157, and a phase angle between the voltage and amperage. From this, controller 160 monitors real power utilized by the TRU 150. As shown in block 1110, the method may include determining, by the controller 160 when the TRU 150 is powered by an internal combustion engine 153 and the energy source is fossil fuel, the consumption of the energy source 158 based on monitoring a fuel flow or an engine speed of the engine 153. As shown in block 1120, the method may include determining, by the controller 160 when the TRU 150 is powered by the generator 156 and the energy source 158 is fossil fuel, the consumption of the energy source 158 based on monitoring an amperage load drawn by the generator 156.

Accordingly the above system is capable of switching between the SS and the CR modes of operating the cooling systems 155 of the TRU 150. Such operations may optimally conserve energy, reducing system wear and operational costs.

Wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radiofrequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and LTE Category M1 internet of things (LTE Cat M1-IOT or LTE-M). Wireless communications for the disclosed systems may include cellular, e.g. 2G/3G/4G/5G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended to limit the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A transportation refrigeration system (100), comprising:
a cargo box (120) extending from a front end (130) to an aft end (140) and defining an interior cargo space (122) for transporting goods (134) of at least one type;
a transportation refrigeration unit, TRU, (150) at the front end (130) of the cargo box (120), wherein the TRU (150) includes a cooling system (155) to maintain the interior cargo space (122) at a set temperature, and wherein the TRU (150) is configured for consumption of at least one type of energy source (158) to run the cooling system (155); and
a controller (160), operationally coupled to the TRU (150), for selectively cooling the interior cargo space (122) of the cargo box (120) by switching a run mode of the cooling system (155) between a start-stop, SS, mode and a continuous-run, CR, mode, depending on a consumption of energy from an energy source (158) by the TRU (150), wherein the controller (160) determines the consumption based on utilizing at least one factor, including one or more of:
an atmospheric condition;
a time of day;
a geographic location of the cargo box (120);
the set temperature for the interior cargo space (122);
a type of goods (134); or
a type of energy source (158).

2. The system (100) of claim 1, wherein the at least one factor utilized by the controller (160) is directed to the type of energy source (158), including whether the energy source (158) is:
a fossil fuel (151);
electricity supplied from a battery (310); or
electricity supplied from a power grid (157).

3. The system (100) of claim 1 or 2, wherein the at least one factor utilized by the controller (160) is directed to the type of goods (134) includes whether the goods (134) are non-perishable goods (134) or perishable goods (134), wherein the perishable goods (134) are frozen goods (134) or fresh goods (134).

4. The system (100) of any of claims 1-3, wherein the at least one factor utilized by the controller (160) is directed to the atmospheric condition, which includes one or more of current outside temperature, near-term forecasted outside temperature, and a solar radiation level.

5. The system (100) of any of claims 1-4, wherein when the goods (134) are the perishable goods (134), the controller (160) is configured to switch from the SS mode to the CR mode upon determining that:
responsive to an increase in ambient temperature, the consumption of the energy source (158) will increase above (35C) a first threshold to maintain the interior cargo space (122) at the set temperature; or
responsive to a decrease in ambient temperature, the consumption of the energy source (158) will increase above (35C) a second threshold to maintain the interior cargo space (122) at the set temperature.

6. The system (100) of any of claims 1-5, wherein the controller (160) selects the run mode by applying the at least one factor to a lookup table (1A, 1B) or map in a database (355) accessible by the controller (160).

7. The system (100) of any of claims 1-6, wherein the energy source (158) is electricity supplied from the battery (310) and the consumption is determined by the controller (160) communicating with an on-board battery (310) management system (100).

8. The system (100) of any of claims 1-7, wherein the energy source (158) is electricity supplied from the power grid (157) and the consumption of the energy source (158) is determined based on the controller (160) monitoring voltage supplied by the power grid (157), amperage drawn by the TRU (150) from the power grid (157), and a phase angle between the voltage and amperage, to thereby monitor real power utilized by the TRU (150).

9. The system (100) of any of claims 1-8, wherein the TRU (150) is powered by an engine (230, 153), the energy source (158) is the fossil fuel (151), and the consumption of the energy source (158) is determined based monitoring, by the controller (160), a fuel flow or an engine (230, 153) speed of the engine (230, 153).

10. The system (100) of any of claims 1-9, wherein the TRU (150) is powered by a generator (240, 156), the energy source (158) is the fossil fuel (151), and the consumption of the energy source (158) is determined based monitoring, by the controller (160), an amperage load drawn by the generator (240, 156).

11. A method of operating a transportation refrigeration system (100), comprising:
selectively cooling an interior cargo space (122) of a cargo box (120) by a transportation refrigeration unit (TRU (150) ), by control of a controller (160) operatively coupled to the TRU (150), by switching a run mode of a cooling system (155) of the TRU (150) between a start-stop mode (SS mode) and a continuous-run mode (CR mode), depending on a consumption of energy from an energy source (158) by the TRU (150),
wherein the method includes determining, by the controller (160), the consumption of energy based on at least one factor, including one or more of:
an atmospheric condition that includes one or more of ambient temperature and solar radiation;
a time of day;
a geographic location of the cargo box (120);
a set temperature for the interior cargo space (122);
a type of goods (134); or
a type of energy source (158).

12. The method of claim 11, comprising utilizing, by the controller (160), the at least one factor directed to:
the type of energy source (158), including fossil fuel (151), electricity supplied from a battery (310), or electricity supplied from a power grid (157); and/or
the type of goods (134), including non-perishable goods (134) or perishable goods (134), wherein the perishable goods (134) are frozen goods (134) or fresh goods (134); and/or
the atmospheric condition, including one or more of current outside temperature, near-term forecasted outside temperature, and a solar radiation level.

13. The method of any of claims 11-12, wherein when a type of the goods (134) are the perishable goods (134), the method includes switching, by the controller (160), from the SS mode to the CR mode upon determining that:
responsive to an increase in ambient temperature, a consumption of the energy source (158) will increase above (35C) a first threshold to maintain the interior cargo space (122) at the set temperature; or
responsive to a decrease in ambient temperature, the consumption of the energy source (158) will increase above (35C) a second threshold to maintain the interior cargo space (122) at the set temperature.

14. The method of any of claims 11-13, including selecting, by the controller (160), the run mode by applying the at least one factor to a lookup table (1A, 1B) or map in a database (355) accessible by the controller (160).

15. The method of any of claims 11-14, including determining, by the controller (160):
when the energy source (158) is electricity supplied from the battery (310), a consumption of the energy source (158) by the controller (160) communicating with an on-board battery (310) management system (100); and/or
when the energy source (158) is electricity supplied from the power grid (157), a consumption of the energy source (158) based on monitoring voltage supplied by the power grid (157), amperage drawn by the TRU (150) from the power grid (157), and a phase angle between the voltage and amperage, to thereby monitor real power utilized by the TRU (150); and/or
when the TRU (150) is powered by an engine (230, 153) and the energy source (158) is the fossil fuel (151), a consumption of the energy source (158) based on monitoring a fuel flow or an engine (230, 153) speed of the engine (230, 153); and/or
when the TRU (150) is powered by a generator (240, 156) and the energy source (158) is the fossil fuel (151), a consumption of the energy source (158) based on monitoring, by the controller (160), an amperage load drawn by the generator (240, 156).
